# EUROPEAN PATENT SPECIFICATION

(11) **EP 4 274 507 B1**
(45) Date of publication and mention of the grant of the patent: **29.04.2026**
(21) Application number: 22737164.8
(22) Date of filing: 07.01.2022
(51) Int. Cl.: A61C 3/14

(54) **LOCKING DENTAL FORCEPS FOR TOOTH EXTRACTION**
ZAHNZANGE MIT VERRIEGELUNG ZUR ZAHNEXTRAKTION
DAVIER DENTAIRE À VERROUILLAGE POUR UNE EXTRACTION DENTAIRE

(30) Priority: 11.01.2021 US 202163199585 P; 05.01.2022 US 202217647072
(43) Date of publication of application: 15.11.2023
(73) Proprietor: Frazee, Dennis, Bargersville, IN 46106 (US)
(72) Inventor: Frazee, Dennis, Bargersville, IN 46106 (US)
(74) Representative: Holt, Lucy Rose
(86) International application number: PCT/US2022/011603
(87) International publication number: WO 2022/150579

(56) References cited:
- EP-A1- 0 054 192
- WO-A1-2010/139459
- WO-A1-2016/188995
- CN-U- 202 313 781
- DE-C2- 2 849 009
- KR-U- 20110 007 782
- US-A1- 2004 031 131
- US-A1- 2006 149 315

## Description

### FIELD OF THE INVENTION

The present invention generally relates to a tool for use in the safe and efficient extraction of teeth in the dental industry. More particularly, the present invention relates to a pair of locking dental forceps which enable precise tooth extraction to minimize the chances of adverse events.

### BACKGROUND OF THE INVENTION

Often times various adverse dental events require that one or more teeth be removed. These events include, dental trauma, tooth disease and dental overcrowding. Dental trauma includes injury to a tooth and the associated periodontal ligament, gums and the alveolar bone; as well as the nearby soft tissues. Tooth disease includes excessive damage to the tooth due to tooth decay or periodontal disease that renders the tooth dead. Dentists will often attempt to save the tooth through crown restoration or a root canal procedure, however, extraction is required when the tooth is beyond saving. Lastly, dental crowding refers to an inconsistency between tooth size and jaw size which can result in misalignment of the row due to large teeth, small jaws or both. For cosmetic and dental health reasons patients may sometimes elect to have a tooth extraction to alleviate overcrowding.

Dentists commonly perform tooth extractions in either a simple or surgical context, with the surgical setting being much less frequent and reserved for more complex extractions which are required in the case of impacted, broken or otherwise difficult tooth presentations. The present invention pertains primarily to use in a simple extraction, but may be utilized in a surgical setting if desired.

In a conventional simple tooth extraction, the dentist numbs the tooth using an anesthetic, which is often administered locally through a number of injections around the tooth. Following sufficient numbing, the dentist may utilize elevators, which resemble small screw drivers, designed to be pressed in between the tooth and its surrounding bone so as to enable the dentist to press the tooth upwards and rock it against the jaw bone. Elevators enable the dentist to expand the socket and separate the tooth from its ligament, at least partially. Next, the dentist utilizes a pair of forceps, which resemble common pliers, to securely grasp the tooth and complete the extraction. Typically, the tooth is firmly grasped with the forceps and rocked back and forth while applying an upward force until the tooth is removed. Depending upon the size and shape of the tooth, as well as the tooth's location in the patient's mouth, the use of various types of forceps is often required. In some instances, two or more different types of forceps are used to extract the same tooth.

The prior art has attempted to address the need for multiple types of dental forceps by providing a single pair of forceps with interchangeable tips, commonly known as "beaks." For example, U.S. Patent 1,085,235 describes a pair of conventional dental forceps with the improvement being a number of removable and interchangeable beaks. These interchangeable beaks reduce the number of forceps that a dentist must have ready, sterilized and available for a given tooth extraction.

Despite the above, a need still exists in the tooth extraction art to reduce the manual stress and strain required of a dentist during a tooth extraction. During a typical tooth extraction, the dentist is required to provide sufficient compressive force to the handles of the forceps in order to maintain a grip on the tooth, without squeezing too hard so as to crack the tooth, while simultaneously providing lateral and/or upward force to the tooth so as to accomplish the extraction. All the while, the dentist must ensure that the forceps and his hand and arm do not harm the patient in any way or make them more uncomfortable than necessary. This places intense pressure on the dentist in order to accomplish an optimal extraction in which unintended complications are avoided.

What is needed is a tooth extraction device in which the dentist may quickly and securely grip and set the desired pressure on the tooth and lock it in, thereby relieving additional stress and tension from the dentist and freeing him/her up to concentrate solely on the forces necessary to extract the tooth in an efficient manner.

DE 28 49 009 C2 relates generally to a surgical forceps. US2006149315A1 relates generally to an orthopaedic ratcheting forceps.

### SUMMARY OF THE INVENTION

Aspects of the invention are set out in the claims.

Various designs and techniques are disclosed for a type of dental forceps for use in tooth extraction which include a locking mechanism. In one particular form, the forceps include a locking mechanism that is located on the opposite side of the pivot point from the beak. By providing this locking mechanism, the forceps may be secured to the tooth with the requisite force thereby relieving the added strain on the dentist's hand and arm during extraction. This can lead to more successful extractions and reduced patient distress.

In a further form of the invention, the locking mechanism includes a row of teeth formed on one handle near the pivot point and a locking rod on the other handle, the locking rod having a head at one end which may selectively engage the row of teeth when coupled. At the opposite end of the locking rod is a release, which can be activated by the user to unlock the forceps.

In other forms, the dental forceps include interchangeable beaks to enable a dentist to select the desired beak in order to accomplish the extraction presented without requiring an array of forceps. In yet another form, at least one of the handles of the forceps is interchangeable to enable the dentist to select a desired arrangement based upon the position of the tooth within the patient's mouth to most safely and efficiently extract the tooth.

In another form, a dental forceps includes a first elongate member having a first beak portion at its distal end and a handle portion at its proximal end. A recess is defined through a portion of the first elongate member. A locking mechanism includes a locking arm that is positioned within the recess defined in the first elongate member. The locking arm includes a head at a distal end of the locking arm and a release at a proximal end of the locking arm. In some forms, the locking arm is rotatable within the recess with respect to the first elongate member.

A second elongate member is connected to the first elongate member at a pivot point. The second elongate member includes a second beak portion at its distal end and a handle portion at its proximal end, and the second elongate member includes a series of teeth. The pivot point may be positioned between the beak portions of the elongate members and the locking arm. The series of teeth is engageable by the head of the locking arm to maintain the position of the second elongate member with respect to the position of the first elongate member. In some forms, the series of teeth is defined on a proximal facing surface of the second elongate member.

The locking mechanism includes a biasing mechanism that includes a first end and a second end. The first end of the biasing mechanism is attached to the locking arm and the second end of the biasing member is attached to the first elongate member. The biasing mechanism may bias the locking arm so that the head of the locking arm engages the series of teeth. In some instances, the biasing mechanism may be attached to the locking arm at the release.

In some forms, the first elongate member includes a first pivot recess and the second elongate member includes a second pivot recess. The first pivot recess may be aligned with the second pivot recess when the first and second elongate members are releasably connected. A connection member may be inserted through the first pivot recess and the second pivot recess to form the pivot point when the first pivot recess and the second pivot recess are aligned.

In some forms, the head of the locking arm may be configured to disengage the series of teeth when pressure is applied to the release of the locking arm. In some instances, the first elongate member and the second elongate member may pivot with respect to each other when the head of the locking arm is disengaged from the series of teeth. Additionally, the head of the locking arm may be configured to move to an adjacent tooth in the series of teeth when pressure is applied to the handle portions of the first elongate member and the second elongate member.

This summary is provided to introduce a selection of concepts in a simplified form that are described in further detail in the detailed description and drawings contained herein. This Summary is not intended to identify key features or essential features of the claimed subject matter, nor is it intended to be used as an aid in determining the scope of the claimed subject matter. Yet other forms, embodiments, objects, advantages, benefits, features, and aspects of the present invention will become apparent from the detailed description and drawings contained herein.

### BRIEF DESCRIPTION OF THE DRAWINGS

FIG. 1 is a top diagrammatic view showing a pair of dental forceps according to one example.
FIG. 2 is a diagrammatic top view showing the pair of dental forceps shown in FIG. 1, but in a partially disassembled state.
FIG. 3 is a side view showing the pair of dental forceps shown in FIG. 1.
FIG. 4 is a diagrammatic top view showing a pair of dental forceps according to an embodiment of the present invention.

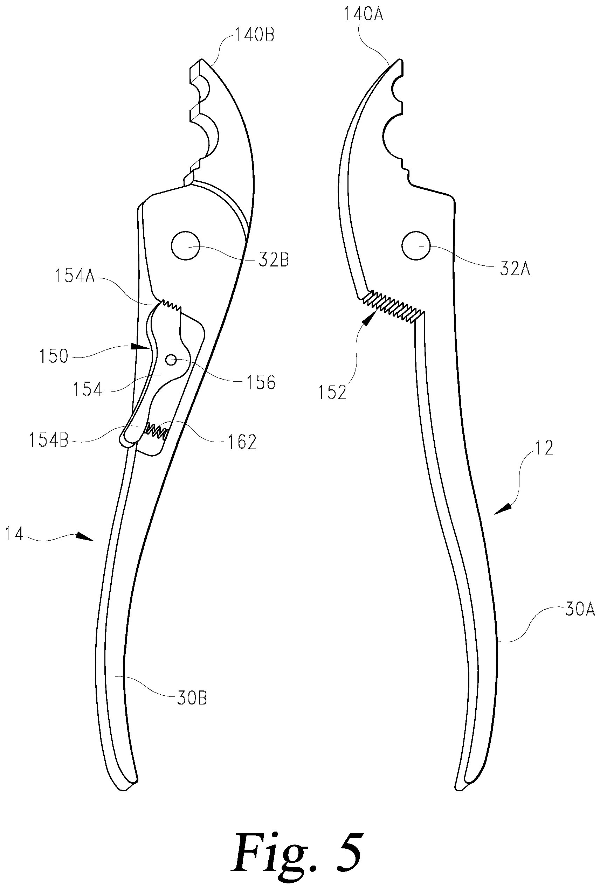

FIG. 5 is a diagrammatic top perspective view showing the pair of dental forceps shown in FIG. 1, but in a partially disassembled state.

### DETAILED DESCRIPTION OF THE SPECIFIC EMBODIMENTS

For the purposes of promoting and understanding of the principles of the invention, reference will now be made to the embodiment illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

In certain embodiments of the present application, a pair of dental forceps are disclosed which include a mechanical locking mechanism. The dental forceps may come in a set, comprising a plurality of forceps, each having a different beak configuration and perhaps a different handle arrangement, shape and/or size in order to provide a set for accomplishing many different types of extractions under varying circumstances. In other embodiments, a pair of dental forceps having interchangeable and/or adjustable beaks and/or handle(s) for use in differing periodontal situations. In either form, the interchangeable beaks and/or handle(s) of the forceps may come in a variety of shapes and sizes in order to accommodate the particular needs of a given tooth extraction procedure.

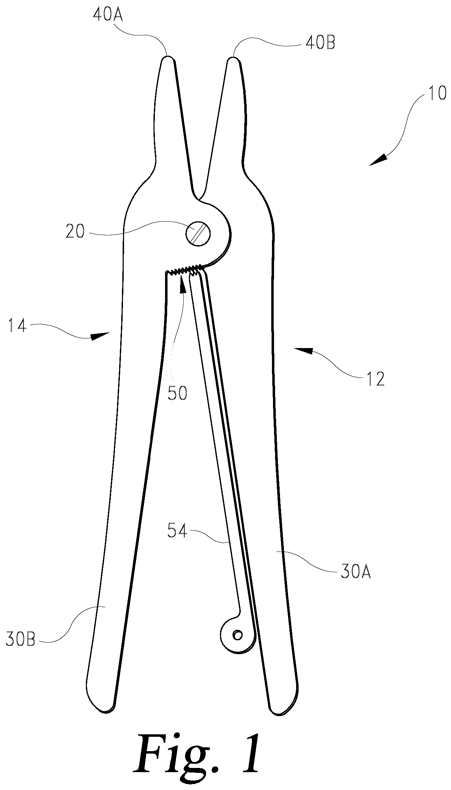

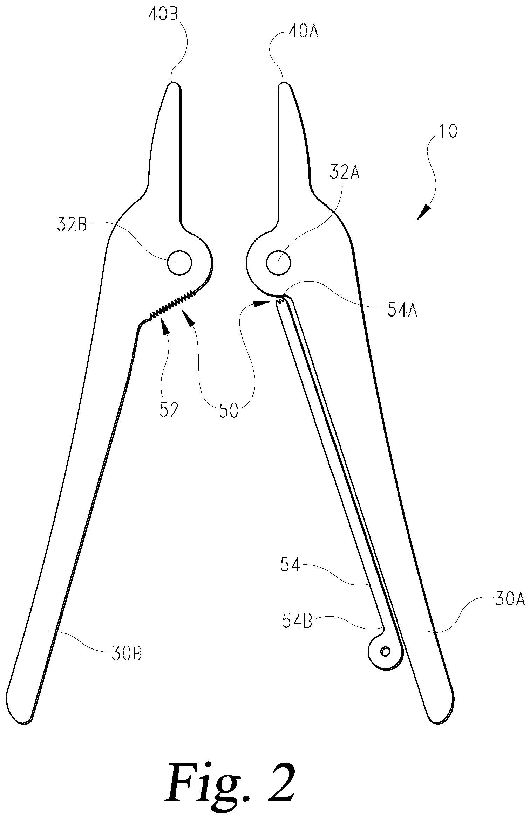

Referring generally to FIG. 1, there is shown an example of a pair of dental forceps 10 for tooth extraction. The dental forceps 10 consist of two elongate members 12 and 14 which may be joined at a pivot point 20. The two elongate members 12 and 14 include a pair of hand grips or handles 30A and 30B, pivot recesses 32A and 32B (shown in FIG. 2), jaws or beak members 40A and 40B and locking mechanism 50. The dental forceps 10 have a proximal end, which shall be defined as the end nearest the hand grips (shown to the right in FIG. 1) and a distal end nearest the working portion or "beak" (shown to the left in FIG. 1).

The handles 30 may be straight, arcuate, a combination of the two or in some alternative arrangement. In a further form, the handles 30 are curved in an ergonomic manner in order to fit within the user's hands comfortably so as to reduce fatigue and increase precision. In further forms, handles 30 may be at least partially coated or covered in a grip enhancing material, which is preferably capable of undergoing sterilization and/or removable, such as plastic, silicone or some other suitable material. As with traditional pliers, when the user applies compressive force to the handles 30, that force is transferred across the fulcrum of pivot point 20 and the jaws of the beak 40 come together and ultimately contact one another or secure firmly against the side of whatever object may be positioned between them. Locking mechanism 50 enables the user to lock the dental forceps in place, such as at a given tension on an object within the beak 40.

The parts of the dental forceps 10 disclosed herein are made, at least partially, from biocompatible materials that provide sufficient structural rigidity, such as stainless steel, titanium, nickel, alloys thereof or other sturdy materials. It shall be appreciated that materials other than those described above could also be used in the construction of the dental forceps disclosed 10 herein. In addition, absent a single use arrangement, the material selected should be capable of undergoing the repeated sterilization processes described herein without substantial adverse effects.

FIG. 2 shows, with continuing reference to FIG. 1, dental forceps 10 in the dissembled state with elongate members 12 and 14 separated. As shown in FIG. 1, elongate members 12 and 14 are joined at pivot point 20 by having their respective pivot recesses 32A and 32B rotatably connected. In one form, this may be done through the insertion of a connection member, such as an axle, screw, bolt, rivet or the like. However, in certain forms, the elongate members 12 and 14 must be arranged so as to allow for periodic separation from one another by the user for purposes of cleaning and sterilization. Shown in further detail, locking mechanism 50 includes a series of teeth 52 formed on the proximal end of elongate member 12, such as adjacent to the pivot point 20. The series of teeth 52 may include any number of teeth, such as two, three, four, five, ten or the like, with each representing a discrete position that the dental forceps may be locked into. Complementing the series of teeth 52 is a locking arm 54 which is secured to elongate member 12 and spans some portion of handle 30A. The head 54A of locking arm 54 is operable to engage with each of the teeth within the row of teeth 52 to secure the two handles 30 in a given orientation. As additional pressure is applied, the head 54A moves to the next tooth in the series of teeth 52, thereby allowing the user to simply squeeze tighter until the next tooth in the row of teeth 52 is engaged by the head 54A, thereby locking the dental forceps 10 into a slightly tighter position.

In the event the user wishes to release the dental forceps 10 and in particular locking mechanism 40, the user may simple apply sufficient pressure to the release 54B of locking arm 54 which frees head 54A from the row of teeth 52 and enables the two elongate members 12 and 14 to rotate freely again relative to one another.

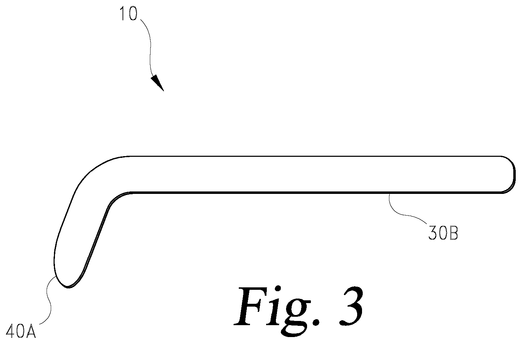

FIG. 3 is a side view of the dental forceps 10 shown in FIGs. 1 and 2. As can be seen, in this particular shape, the beak 40 takes a ninety degree turn just past the pivot point 20 when compared to the elongate members 30 to enable the easy grasping and extraction of a tooth while maintaining the handles 30 outside of the patient's mouth. It shall be appreciated that many other designs for the shape and size of beak 40 as well as other components of dental forceps 10 may be desired.

In a further form, one or both of beak members 40 may be removable and/or interchangeable. For example, different beak members may have different sizes, different internal grip textures, different angles, different lengths and/or different shapes, to name a few non-limiting examples. The beak members 40 may connect to the elongate member 12 and/or 14 at their distal end, such as by a snap fit, screw in, or other secure connection method.

In an alternative or additional form, one or both of handles 30 may be removable and/or interchangeable. For example, different handles may have different sizes, different grip textures, different angles, different lengths and/or different shapes, to name a few non-limiting examples. The handle members 30 may connect to the elongate member 12 and/or 14 at their proximal end, such as adjacent to the pivot point 20, such as by a snap fit, screw in, or other secure connection method, with the direction of leverage during use preferably securing the connection further.

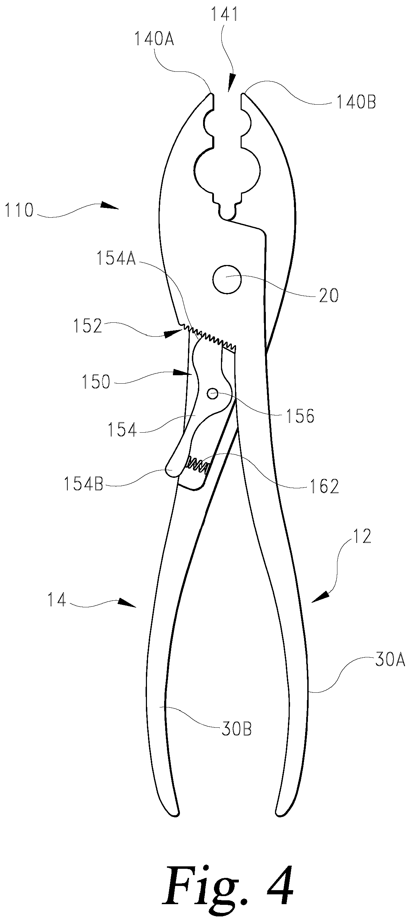

An embodiment of a pair of dental forceps 110 for tooth extraction is shown in FIG. 4. The dental forceps 110 consist of two elongate members 12 and 14 that may be pivoted at a pivot point 20, and the two elongate members 12 and 14 each include a respective handle portion formed by hand grips or a handle 30A and 30B. The beak members 140A, 140B included in this embodiment have a different shape than the beak members 40A, 40B illustrated in FIG. 1. However, in other embodiments, the beak members 140A, 140B may have the same shape or form as the beak members 40A, 40B.

The dental forceps also include a locking mechanism 150. The locking mechanism 150 includes a series of teeth 152 formed along a proximal facing surface of elongate member 12. This series of teeth 152 may include any number of teeth, such as two, three, four, five, ten or the like, with each representing a discrete position that the dental forceps may be locked into. Complementing the teeth 152 is a locking arm 154 that has a head 154A and a release 154B. The locking arm 154 is positioned within a recess 160 that is defined in a portion of the elongate member 14 and is pivotally coupled to the elongate member 14 at a pivot point 156.

The head 154 of the locking arm 154 is operable to engage with each of the teeth within the row of teeth 152 to secure the two handles 30 in a given orientation. As additional pressure is applied, the head 154A moves to the next tooth in the series of teeth 152, thereby allowing the user to simply squeeze tighter until the next tooth in the row of teeth 152 is engaged by the head 154A, thereby locking the dental forceps 10 into a slightly tighter position.

A biasing mechanism, such as a spring 162, is positioned between the locking arm 154 and the elongate member 14 to bias the locking arm 154 in a certain position with respect to the series of teeth 152. According to the invention, a first end of the spring 162 connects to the locking arm 154 at the release 154B of the locking arm 154 and a second end of the spring 162 is connected to the elongate member 14. In the event the user wishes to release the dental forceps 10 and in particular locking mechanism 150, the user may simple apply sufficient pressure to the release 154B of locking arm 154 to overcome the bias of the spring 162 and free the head 154A from the row of teeth 152. This enables the two elongate members 12 and 14 to rotate freely again relative to one another.

In operation, the spring 162 biases the locking arm 154 so that the head 154A engages one of the teeth of the series of teeth 152. While the spring 162 is engaged to the series of teeth 152, the elongate members 12, 14 are maintained in a set position with respect to each other so that an opening 141 formed between the beak members 140A, 140B is locked at a certain width. The desired width of the opening 141 between the beak members 140A, 140B may be dependent on the size of the tooth to be extracted, the shape of the tooth to be extracted, or any other suitable purpose.

In certain instances, it may be desired to modify the width of the opening 141 between the beak members 140A, 140B. To make the opening 141 smaller, a user may apply pressure to the hand grips 30A, 30B of the elongate members 12, 14 to bring the hand grips 30A, 30B closer together. When the pressure is great enough to overcome the bias applied by the spring 162 on the locking arm 154, the head 154A of the locking arm moves to an adjacent tooth in the series of teeth 152 and the elongate members 12, 14 are locked in a new position with the beak members 140A, 140B closer together. In the embodiment shown in FIG. 4, applying pressure to the hand grips 30A, 30B causes the head 154A of the locking arm to move to the right along the series of teeth 152.

To make the opening 141 between the beak members 140A, 140B larger, a user may apply pressure to the release 154B of the locking arm 154. This pressure causes the locking arm 154 to pivot with respect to elongate member 14 about pivot point 156, compressing the spring 162 and disengaging the head 154A from the series of teeth 152. While maintaining the pressure on release 154B to keep the head 154A is disengaged from the series of teeth 152, the user may push or pull hand grip 30A away from hand grip 30B to increase the distance between the ends of beak members 140A, 140B so that opening 141 is at a desired width. Then, once the pressure on release 154B is released, the spring 162 biases the locking arm 154 back to a position where the head 154A engages a tooth in the series of teeth 152 so that the position of the elongate members 12, 14 is once again maintained.

## Claims

1. A dental forceps (110) comprising:
a pair of elongate members (12, 14) releasably connected at a pivot point (20), each elongate member (12, 14) having a beak portion (140A, 140B) at its distal end and a handle portion (30A, 30B) at its proximal end;
a first elongate member (14) within the pair of elongate members (12, 14) having a locking arm (154) connected thereto, the locking arm having a head (154A) at its distal end and a release (154B) at a proximal end of the locking arm (154);
a second elongate member (12) within the pair of elongate members (12, 14) having a series of teeth (152) engageable by said head (154A) to maintain the pair of elongate members (12, 14) in position relative to one another;
a biasing mechanism (162) including a first end and a second end, wherein the first end of the biasing mechanism (162) is attached to the locking arm (154) and the second end of the biasing mechanism (162) is attached to the first elongate member (14);
**characterized in that**
the biasing mechanism (162) is attached to the locking arm (154) at the release (154B).

2. The dental forceps (110) of claim 1, wherein the series of teeth (52) is defined on a proximal facing surface of the second elongate member (12).

3. The dental forceps (110) of claim 1,
wherein the first elongate member (14) includes a first pivot recess (32B),
wherein the second elongate member (12) includes a second pivot recess (32A); and
wherein the first pivot recess (32B) is aligned with the second pivot recess (32A) when the pair of elongate members (12, 14) are releasably connected.

4. The dental forceps (110) of claim 3, wherein a connection member is removably inserted through the first pivot recess (32B) and the second pivot recess (32A) to form the pivot point (20) when the first pivot recess (32B) and the second pivot recess (32A) are aligned.

5. The dental forceps (110) of claim 1, wherein the head (154A) is configured to disengage the series of teeth (152) when pressure is applied to the release (154B) of the locking arm (154).

6. The dental forceps (110) of claim 1, wherein the first elongate member (14) and the second elongate member (12) may pivot with respect to each other when the head (154A) of the locking arm is disengaged from the series of teeth (52).

7. The dental forceps (110) of claim 1, wherein the head (154A) of the locking arm (154) is configured to move to an adjacent tooth in the series of teeth (152) when pressure is applied to the handle portions (30A, 30B) of the first elongate member (14) and the second elongate member (12).

8. The dental forceps (110) of claim 1,
wherein the beak portion (140B) of the first elongate member (14) is substantially perpendicular to the handle portion (30B) of the first elongate member (14); and
wherein the beak portion (140A) of the second elongate member (12) is substantially perpendicular to the handle portion (30A) of the second elongate member (12).

9. The dental forceps (110) of claim 1, wherein a recess (160) is defined through a portion of the first elongate member (14); and
wherein the locking arm (154) is positioned within the recess (160) defined in the first elongate member (14).

10. The dental forceps (110) of claim 9, wherein the locking arm (154) is rotatable within the recess (160) with respect to the first elongate member (14).

11. The dental forceps (110) of claim 9, wherein the biasing mechanism (162) biases the locking arm (154) so that the head (154A) of the locking arm (154) engages the series of teeth (152).

## Patentansprüche

1. Dentalzange (110), umfassend:
ein Paar langgestreckter Elemente (12, 14), die an einem Drehpunkt (20) lösbar verbunden sind, wobei jedes langgestreckte Element (12, 14) einen Schnabelabschnitt (140A, 140B) an seinem distalen Ende und einen Griffabschnitt (30A, 30B) an seinem proximalen Ende aufweist;
wobei ein erstes langgestrecktes Element (14) in dem Paar langgestreckter Elemente (12, 14) einen damit verbundenen Verriegelungsarm (154) aufweist, wobei der Verriegelungsarm einen Kopf (154A) an seinem distalen Ende und eine Löseeinrichtung (154B) an einem proximalen Ende des Verriegelungsarms (154) aufweist;
wobei ein zweites langgestrecktes Element (12) in dem Paar langgestreckter Elemente (12, 14) eine Reihe von Zähnen (152) aufweist, in die der Kopf (154A) eingreifen kann, um das Paar langgestreckter Elemente (12, 14) relativ zu einander in Position zu halten;
einen Spannmechanismus (162) mit einem ersten Ende einem zweiten Ende, wobei das erste Ende des Spannmechanismus (162) an dem Verriegelungsarm (154) angebracht ist und das zweite Ende des Spannmechanismus (162) an dem ersten langgestreckten Element (14) angebracht ist; **dadurch gekennzeichnet, dass**
der Spannmechanismus (162) an der Löseeinrichtung (154B) an dem Verriegelungsarm (154) angebracht ist.

2. Dentalzange (110) nach Anspruch 1, wobei die Reihe von Zähnen (52) auf einer nach proximal weisenden Oberfläche des zweiten langgestreckten Elements (12) definiert ist.

3. Dentalzange (110) nach Anspruch 1,
wobei das erste langgestreckte Element (14) eine erste Drehachsenaussparung (32B) umfasst,
wobei das zweite langgestreckte Element (12) eine zweite Drehachsenaussparung (32A) umfasst; und
wobei sich die erste Drehachsenaussparung (32B) und die zweite Drehachsenaussparung (32A) decken, wenn das Paar langgestreckter Elemente (12, 14) lösbar verbunden sind.

4. Dentalzange (110) nach Anspruch 3, wobei ein Verbindungselement entfernbar durch die erste Drehachsenaussparung (32B) und die zweite Drehachsenaussparung (32A) gesteckt ist, um den Drehpunkt (20) zu bilden, wenn sich die erste Drehachsenaussparung (32B) und die zweite Drehachsenaussparung (32A) decken.

5. Dentalzange (110) nach Anspruch 1, wobei der Kopf (154A) dazu konfiguriert ist, aus der Reihe von Zähnen (152) auszurücken, wenn Druck auf die Löseeinrichtung (154B) des Verriegelungsarms (154) ausgeübt wird.

6. Dentalzange (110) nach Anspruch 1, wobei sich das erste langgestreckte Element (14) und das zweite langgestreckte Element (12) in Bezug aufeinander drehen können, wenn der Kopf (154A) des Verriegelungsarms aus der Reihe von Zähnen (52) ausgerückt ist.

7. Dentalzange (110) nach Anspruch 1, wobei der Kopf (154A) des Verriegelungsarms (154) dazu konfiguriert ist, sich zu einem benachbarten Zahn in der Reihe von Zähnen (152) zu bewegen, wenn Druck auf die Griffabschnitte (30A, 30B) des ersten langgestreckten Elements (14) und des zweiten langgestreckten Elements (12) ausgeübt wird.

8. Dentalzange (110) nach Anspruch 1,
wobei der Schnabelabschnitt (140B) des ersten langgestreckten Elements (14) im Wesentlichen senkrecht zu dem Griffabschnitt (30B) des ersten langgestreckten Elements (14) ist; und
wobei der Schnabelabschnitt (140A) des zweiten langgestreckten Elements (12) im Wesentlichen senkrecht zu dem Griffabschnitt (30A) des zweiten langgestreckten Elements (12) ist.

9. Dentalzange (110) nach Anspruch 1, wobei eine Aussparung (160) durch einen Abschnitt des ersten langgestreckten Elements (14) hindurch definiert ist; und
wobei der Verriegelungsarm (154) in der in dem ersten langgestreckten Element (14) definierten Aussparung (160) positioniert ist.

10. Dentalzange (110) nach Anspruch 9, wobei der Verriegelungsarm (154) in der Aussparung (160) in Bezug auf das erste langgestreckte Element (14) rotierbar ist.

11. Dentalzange (110) nach Anspruch 9, wobei der Spannmechanismus (162) den Verriegelungsarm (154) derart spannt, dass der Kopf (154A) des Verriegelungsarms (154) in die Reihe von Zähnen (152) eingreift.

## Revendications

1. Pince dentaire (110) comprenant :
une paire d'éléments allongés (12, 14) connectés de manière libérable à un point de pivot (20), chaque élément allongé (12, 14) ayant une partie de bec (140A, 140B) au niveau de son extrémité distale et une partie de poignée (30A, 30B) au niveau de son extrémité proximale ;
un premier élément allongé (14) au sein de la paire d'éléments allongés (12, 14) ayant un bras de verrouillage (154) connecté avec celui-ci, le bras de verrouillage ayant une tête (154A) au niveau de son extrémité distale et un élément de libération (154B) au niveau d'une extrémité proximale du bras de verrouillage (154) ;
un deuxième élément allongé (12) au sein de la paire d'éléments allongés (12, 14) ayant une série de dents (152) avec lesquelles ladite tête (154A) peut entrer en prise pour maintenir la paire d'éléments allongés (12, 14) en position l'un par rapport à l'autre ;
un mécanisme de sollicitation (162) incluant une première extrémité et une deuxième extrémité, dans laquelle la première extrémité du mécanisme de sollicitation (162) est attachée au bras de verrouillage (154) et la deuxième extrémité du mécanisme de sollicitation (162) est attachée au premier élément allongé (14) ;
**caractérisée en ce que** le mécanisme de sollicitation (162) est attaché au bras de verrouillage (154) au niveau de l'élément de libération (154B).

2. Pince dentaire (110) selon la revendication 1, dans laquelle la série de dents (52) est définie sur une surface orientée de manière proximale du deuxième élément allongé (12).

3. Pince dentaire (110) selon la revendication 1,
dans laquelle le premier élément allongé (14) inclut un premier évidement de pivot (32B),
dans laquelle le deuxième élément allongé (12) inclut un deuxième évidement de pivot (32A) ; et
dans laquelle le premier évidement de pivot (32B) est aligné avec le deuxième évidement de pivot (32A) lorsque la paire d'éléments allongés (12, 14) sont connectés de manière libérable.

4. Pince dentaire (110) selon la revendication 3, dans laquelle un élément de connexion est inséré de manière amovible à travers le premier évidement de pivot (32B) et le deuxième évidement de pivot (32A) pour former le point de pivot (20) lorsque le premier évidement de pivot (32B) et le deuxième évidement de pivot (32A) sont alignés.

5. Pince dentaire (110) selon la revendication 1, dans laquelle la tête (154A) est configurée pour se dégager de la série de dents (152) lorsqu'une pression est appliquée sur l'élément de libération (154B) du bras de verrouillage (154).

6. Pince dentaire (110) selon la revendication 1, dans laquelle le premier élément allongé (14) et le deuxième élément allongé (12) peuvent pivoter l'un par rapport à l'autre lorsque la tête (154A) du bras de verrouillage est dégagée de la série de dents (52).

7. Pince dentaire (110) selon la revendication 1, dans laquelle la tête (154A) du bras de verrouillage (154) est configurée pour se déplacer vers une dent adjacente dans la série de dents (152) lorsqu'une pression est appliquée aux parties de poignée (30A, 30B) du premier élément allongé (14) et du deuxième élément allongé (12).

8. Pince dentaire (110) selon la revendication 1,
dans laquelle la partie de bec (140B) du premier élément allongé (14) est sensiblement perpendiculaire à la partie de poignée (30B) du premier élément allongé (14) ; et
dans laquelle la partie de bec (140A) du deuxième élément allongé (12) est sensiblement perpendiculaire à la partie de poignée (30A) du deuxième élément allongé (12).

9. Pince dentaire (110) selon la revendication 1, dans laquelle un évidement (160) est défini à travers une partie du premier élément allongé (14) ; et
dans laquelle le bras de verrouillage (154) est positionné au sein de l'évidement (160) défini dans le premier élément allongé (14).

10. Pince dentaire (110) selon la revendication 9, dans laquelle le bras de verrouillage (154) est capable de rotation au sein de l'évidement (160) par rapport au premier élément allongé (14).

11. Pince dentaire (110) selon la revendication 9, dans laquelle le mécanisme de sollicitation (162) sollicite le bras de verrouillage (154) de sorte que la tête (154A) du bras de verrouillage (154) entre en prise avec la série de dents (152).
